# FASCICULE DE BREVET EUROPEEN

(11) **EP 0 411 529 B1**
(45) Date de publication et mention de la délivrance du brevet: **31.08.1994**
(21) Numéro de dépôt: 90114571.4
(22) Date de dépôt: 30.07.1990
(51) Int. Cl.: H04L 29/06

(54) **Transmetteur numérique synchrone**
Synchroner digitaler Sender
Synchronous digital transmitter

(30) Priorité: 02.08.1989 FR 8910419
(43) Date de publication de la demande: 06.02.1991
(73) Titulaire: ALCATEL BUSINESS SYSTEMS, F-75008 Paris (FR)
(72) Inventeur: Lemaistre, Jacques, F-95100 Argenteuil (FR); Filoux, Thierry, F-92700 Colombes (FR); Pezy, Gérard, F-95230 Soisy-Sous-Montmorency (FR)
(74) Mandataire: Weinmiller, Jürgen

(56) Documents cités:
- DE-A- 3 204 263
- COMMUTATION & TRANSMISSION, no. 4, 1985, pages 25-40, Paris, FR; M. BAUDOIN et al.: "L'autocommutateur multiservice opus 4 000"
- IBM TECHNICAL DISCLOSURE BULLETIN, vol. 30, no. 11, avril 1988, pages 478-482, New York, US; "Electronically switchable interface circuit with multiple eia protocol drivers and receivers"
- DATA COMMUNICATIONS INTERNATIONAL, vol. 18, no. 3, mars 1989, pages 85-100, Santa Clara, US; A. WEISSBERGER: "The evolving versions of ISDN's terminal adapter"

## Description

La présente invention porte sur les transmetteurs numériques assurant une transmission de données entre équipements terminaux de transmission de données, à travers un autocommutateur privé numérique multiservice. Cet autocommutateur accède aux services et réseaux publics ; il accède en particulier au réseau téléphonique commuté à 64 kbit/s et est dans ce cas synchronisé sur le réseau commuté.

On utilise déjà des transmetteurs numériques asynchrones raccordés par une prise V24 à un équipement terminal, de débit de données normalisé pouvant aller jusqu'à 19200 bit/s. Un tel transmetteur numérique assure une transmission de données, à travers une liaison numérique qui le relie à un autocommutateur, selon un mode asynchrone à l'alternat. Ceci est évoqué dans l'article intitulé "l'autocommutateur multiservice OPUS 4000" de M. BAUDOIN, L. LE, J.R. MEJANE, F. SEVEQUE et P. ANIZAN, publié dans la revue Commutation et Transmission n° 4 - 1985, p. 25 à 40. Les échanges entre le transmetteur et l'autocommutateur se font par trames successives de 125 µ secondes. Chaque trame est composée de deux messages, l'un d'émission vers le transmetteur, l'autre d'émission par le transmetteur. Les messages sont composés identiquement d'éléments binaires (eb) répartis comme suit :
- 1 eb de start
- 1 eb de signalisation pour un canal de signalisation à 8 kbit/s
- 1 eb de données pour un canal de données à 8 kbit/s
- 8 eb de parole pour un canal de parole à 64 kbit/s
- 1 eb de parité d'équilibrage de la ligne.

Chaque message est suivi d'un temps de garde, constitué d'éléments binaires de stop qui sont au nombre de 8 pour les 2 messages d'une trame.

Cette composition des messages permet une transmission simultanée de données et de la voix dans le cas d'équipement terminaux voix et données. Un transmetteur numérique asynchrone ne transmettant pas la parole, il utilise le canal de parole à 64 kbit/s pour transmettre les données, il utilise le canal de signalisation pour le dialogue entre l'autocommutateur et le terminal. Le bit de start du message émis par l'autocommutateur permet de récupérer l'horloge à 8 kHz du système dans le transmetteur.

Les données des messages subissent un changement de vitesse permettant d'adapter le débit normalisé du terminal au débit de la ligne pour véhiculer le flux de données, dans un sens et l'autre, aboutissant au circuit de jonction du terminal. Cette adaptation de vitesse est effectuée par sous utilisation du canal de transmission à 64 kbit/s de la ligne et par utilisation d'un tramage selon la norme V110 du CCITT (équivalente à la norme ECMA 102 des fabricants) réalisé au niveau de l'autocommutateur pour la transmission de messages vers un équipement terminal distant, à travers le réseau commuté.

Pour leur transmission en ligne, les messages sont modulés en annulant la composante continue : les "1" logiques n'étant pas modulés, les "0" logiques étant modulés alternativement à un niveau positif et un niveau négatif (+3V, -3V).

La présente invention a pour but de réaliser un transmetteur numérique synchrone, adapté à la transmission synchrone de données entre un autocommutateur numérique privé multiservice et différents types possibles d'équipements terminaux de débits normalisés variables entre eux et pouvant aller jusqu'à 64 kbit/s.

Elle a pour objet un transmetteur numérique synchrone, pour la transmission de données entre un équipement terminal, présentant un circuit d'interface normalisé et un autocommutateur numérique privé multiservice, à travers une ligne de transmission numérique, ledit autocommutateur accèdant lui-même au réseau commuté, le transmetteur numérique comportant :
- un circuit d'interface de ligne, assurant la modulation et la démodulation de signaux numériques transmis sur ladite ligne,
- un circuit de multiplexage couplé au circuit d'interface de ligne, assurant le multiplexage et le démultiplexage des signaux dans différents canaux de la ligne, pour un échange en alternat de messages dans une trame de 125 µ s, l'un desdits canaux étant un canal dit de signalisation et l'un des autres un canal à 64 kbit/s affecté à la transmission des données,
- des moyens élaborant une horloge de trame (HT) définissant ledit canal à 64 kbit/s de la ligne,
- des moyens de traitement des données et de signaux de signalisation pour leur transmission dans un sens et l'autre à l'autocommutateur, à travers la ligne numérique, et à l'équipement terminal,
   ledit transmetteur numérique étant caractérisé
- en ce qu'il est équipé d'au moins une prise pour le raccordement sélectif audit transmetteur de l'un des circuits d'interface V24, V35/V24, X21 d'équipements terminaux de différents débits normalisés, et en ce qu'il comporte, en outre,
- des moyens pour générer une horloge bits (HB) de fréquence égale, à une légère survitesse près, à celle des données de l'équipement terminal raccordé au transmetteur, et dont les fronts montants (R HB) contrôlent la transmission de données dans un sens et les fronts descendants (X HB) la transmission de données dans l'autre sens, entre le transmetteur numérique et l'équipement,
- et des moyens de synchronisation de ladite horloge bits (HB) sur ladite horloge de trame (HT), de période de synchronisation élaborée à partir du débit de l'équipement terminal raccordé par rapport à la fréquence de l'horloge de trame (HT), assurant à chaque période de synchronisation le recalage du front correspondant de l'horloge bits (HB) par rapport à l'horloge de trame (HT).

Les caractéristiques et avantages de la présente invention ressortiront de la description d'un exemple de réalisation illustré dans les dessins ci-annexés. Dans ces dessins :
- les figures 1 et 2 représentent les faces arrière et avant d'un boîtier de transmetteur numérique synchrone selon l'invention,
- la figure 3 est un schéma synoptique du transmetteur numérique synchrone selon l'invention dans une installation d'abonné,
- le figure 4 montre l'organisation générale du programme de traitement du transmetteur numérique selon l'invention, constitué par un enchaînement de programmes principaux,
- la figure 5 représente l'organigramme d'un programme d'initialisation INIT du programme de traitement du transmetteur numérique,
- la figure 6 représente l'organigramme d'un des programmes principaux, dit tache de fond et noté T FOND, pour un mode non connecté du transmetteur numérique ,
- la figure 7 représente l'organigramme d'un autre programme principal dit tache de fond pour les basses vitesses de débit d'équipement terminal et noté T FOND BV, pour un mode connecté du transmetteur numérique,
- la figure 8 schématise un couplage entre des accès côté terminal et des accès côté ligne numérique du transmetteur numérique,
- la figure 9 représente l'organigramme d'un programme, noté SER BV, d'interruption du programme T FOND BV précité de la figure 7,
- les figures 10A, 10B représentent les organigrammes de deux autres programmes notés XHB BV et RHB BV interrompant alternativement le programme T FOND BV précité,
- la figure 11 représente l'organigramme d'un autre programmme principal, dit tache de fond pour une première valeur des hautes vitesses de débit d'équipement terminal et noté T FOND HV 48, pour un mode connecté du transmetteur numérique,
- la figure 12 représente l'organigramme d'un programme SER HV 48 d'interruption du programme T FOND HV 48,
- les figures 13 et 14 sont les organigrammes des programmes correspondants à ceux des figures 11 et 12 pour une deuxième valeur des hautes vitesses de débit d'équipement terminal,
- les figures 15 et 16 sont les organigrammes des programmes correspondant à ceux des figures 11 et 12 pour une troisième valeur des hautes vitesses de débit d'équipement terminal,
- la figure 17 est un diagramme expliquant des programmes correspondant à ceux des figures 10A et 10B mais pour les trois valeurs des hautes vitesses de débit d'équipement terminal.

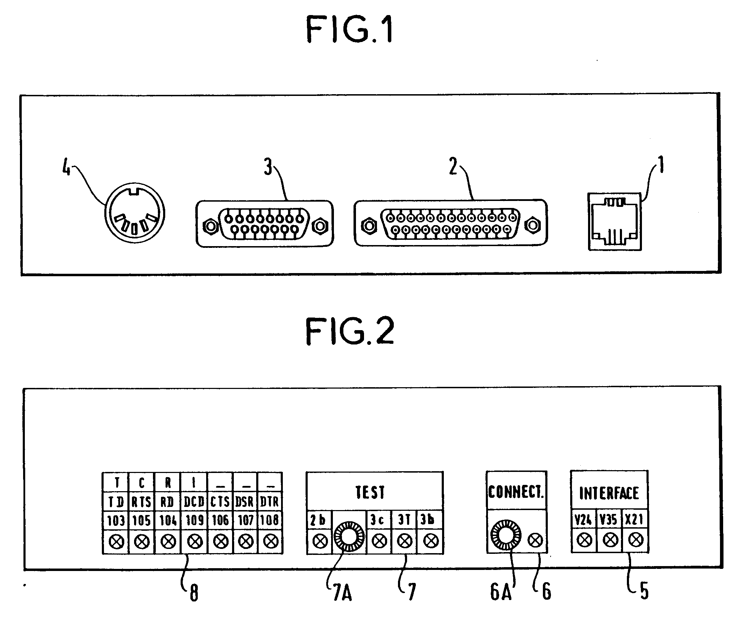

Dans les figures 1 et 2, on a illustré les faces arrière et avant d'un boîtier de transmetteur numérique synchrone, selon la présent invention.

Sur sa face arrière, le boîtier du transmetteur numérique synchrone présente une prise 1 de raccordement à une ligne de transmission numérique, deux prises différentes 2 et 3 de raccordement à un circuit d'interface d'équipement terminal, qui sont conformes aux normes du CCITT et dites prise V24 pour la prise 2 et prise X21 pour la prise 3, et une prise d'alimentation 4.

La prise 1 permet son raccordement par une ligne de transmission numérique à un autocommutateur privé multiservice tel que l'autocommutateur d'entreprise connu sous la dénomination OPUS 300 ou OPUS 4000. Les prises 2 et 3 permettent son raccordement sélectif à un équipement terminal à circuit d'interface correspondant V24 ou X21, ou à circuit d'interface V35 à travers un convertisseur d'interface V35/V24 connu. La prise 4 permet son alimentation extérieure.

Sur sa face avant, le boîtier de transmetteur numérique synchrone est équipé de quatre ensembles de supervision 5, 6, 7 et 8 à diodes électroluminescentes. Ces diodes ont simplement été schématisées par le symbole général d'une lampe, mais n'ont pas été référencées.

L'ensemble 5 est affecté à la signalisation du type de circuit d'interface raccordé à l'une de ses prises 2 et 3 ; il est dit "INTERFACE" et désigné ainsi, il est à trois diodes pour les trois types de circuits d'interface possibles V24, V35, X21 désignés dans cet ensemble.

L'ensemble 6 est affecté à la signalisation d'une liaison établie entre ce transmetteur numérique synchrone et un autre transmetteur numérique synchrone analogue, à travers l'autocommutateur ; il est dit "CONNECT" et désigné ainsi. Il est à une seule diode électroluminescente. Cet ensemble 6 comporte un interrupteur de connexion 6A utilisable pour les circuits d'interface V24 et V35.

L'ensemble 7 est affecté à la signalisation de différents bouclages possibles vers le terminal ou vers l'autocommutateur ; il est dit "TEST" et désigné ainsi. Il est à quatre diodes pour la supervision de trois bouclages locaux à des niveaux différents vers le terminal, qui sont désignés par 3c, 3T et 3b, et d'un bouclage distant vers l'autocommutateur réalisé au niveau d'un circuit d'interface V24 uniquement, qui est désigné par 2b. Un interrupteur ou bouton de test 7A est associé à cet ensemble. Cet interrupteur permet le déclenchement manuel des boucles locales puis la sortie de cette phase de bouclage, qui sont obtenus par des actions successives sur l'interrupteur 7A, lorsque le transmetteur n'est pas en mode connecté (diode de l'ensemble 6 éteinte). Il permet aussi le déclenchement manuel de la boucle distante 2b, puis la sortie de cette phase de bouclage, par une première puis une deuxième action sur cet interrupteur avec un circuit d'interface V24, lorsque le transmetteur est en mode connecté. Certaines de ces boucles peuvent également être obtenues automatiquement, par certains circuits de jonction du circuit d'interface V24.

L'ensemble 8 est un ensemble de supervision des états de différents circuits de jonction des différents circuits d'interface V24, V35 et X21. Ces circuits de jonction, de caractéristiques électriques conformes aux dispositions des avis V28, V28 et V35 ou V11 du CCITT, selon le circuit d'interface concerné, sont notés par leurs références selon ces avis. Ce sont les circuits notés T, C, R, I, auxquels correspondent les mêmes désignations de signaux, pour le circuit d'interface X21. Ce sont les circuits 103 à 109 auxquels correspondent les désignations de signaux telles que noté, pour les circuits d'interface V24 et V35.

Ces désignations de signaux sont rappelées ci-après, avec le sens des signaux :
- C :: Commande, de l'équipement terminal vers le transmetteur,
- I :: Indication, du transmetteur vers l'équipement terminal,
- T ou TD :: Emission de données, depuis l'équipement terminal vers le transmetteur,
- RTS :: Demande pour émettre, de l'équipement terminal vers le transmetteur;
- R ou RD :: Réception de données, du transmetteur vers l'équipement terminal,
- DCD :: Détection du signal de ligne reçu, du transmetteur vers l'équipement terminal,
- CTS :: Prêt à émettre des données, du transmetteur numérique vers l'équipement terminal,
- DSR: Poste de données prêt à fonctionner, du transmetteur vers l'équipement terminal,
- DTR :: Equipement terminal de données prêt, de l'équipement vers le transmetteur,

L'ensemble 8 est à sept diodes électroluminescentes, quatre d'entre elles sont communes aux circuits de jonction T, C, R, I et aux circuits de jonction 103, 105, 104 et 109.

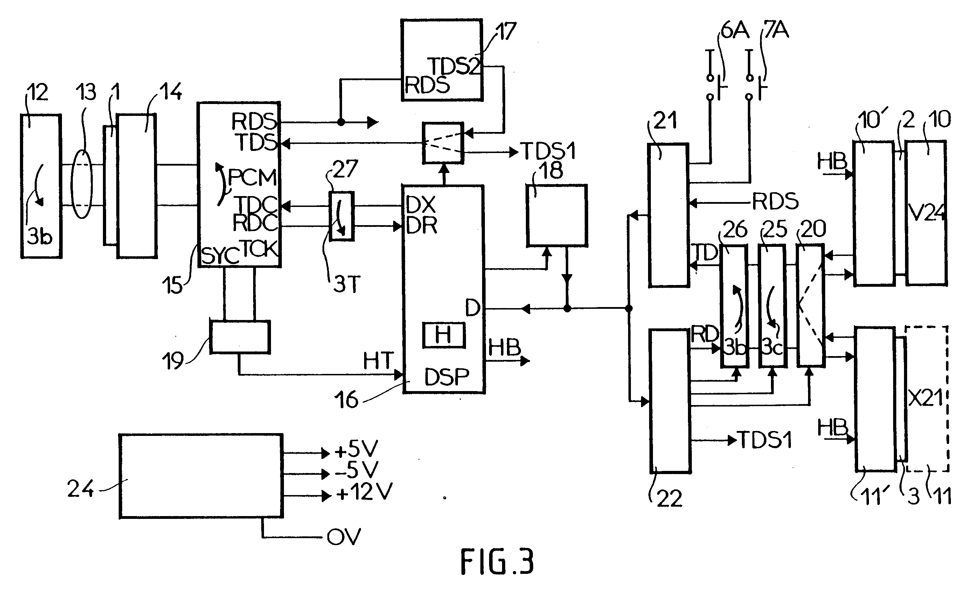

Dans la figure 3, on a donné le schéma synoptique du transmetteur numérique synchrone selon l'invention. Il est montré raccordé à un circuit 10 d'interface V24 d'équipement terminal ou à un circuit 11 d'interface X21 d'équipement terminal. Le circuit 10 qui est illustré en traits pleins et le circuit 11 qui est illustré en pointillés traduisent ce raccordement sélectif, a travers la prise 2 ou 3 correspondante du transmetteur. Le transmetteur est également montré relié à un autocommutateur numérique privé multiservice 12, par une ligne de transmission numérique 13 raccordée à la prise 1.

On indique que la prise 2 permet, tout aussi bien, le raccordement d'un circuit interface V35 d'équipement terminal, à travers un convertisseur V24/V35 connu.

L'autocommutateur 12 relié au transmetteur numérique synchrone est un autocommutateur numérique multiservice d'entreprise, tel qu'un autocommutateur OPUS 300 ou 4000 de la demanderesse accédant aux services et réseaux publics pour la mise en liaison d'équipements terminaux. Il est synchronisé sur le réseau commuté à 64 kbit/s.

Le transmetteur numérique synchrone comporte :
- un circuit d'interface de ligne 14, aboutissant à la prise 1, assurant la modulation et la démodulation, à une fréquence de 256 kHz, de signaux numériques transmis dans un sens et l'autre sur la ligne 13, avec une composante continue nulle,
- un circuit prédiffusé 15 relié au circuit d'interface de ligne 14, assurant le multiplexage et le démultiplexage des signaux numériques transmis sur la ligne 13 dans les différents canaux de transmission numérique,
- un processeur de traitement de signal 16, noté DSP, relié au circuit prédiffusé 15, assurant la gestion des bits de signalisation (TDS1) quand le transmetteur numérique est au repos, dit mode non connecté, la génération d'une l'horloge HB d'émission/réception de données de l'équipement terminal, la synchronisation de cette horloge sur l'horloge à 8 kHz du système donnée par l'autocommutateur, et la fonction de tramage selon la norme V110 du CCITT,
- un microcontrôleur masqué 17 également relié au circuit prédiffusé 15 et pouvant être contenu dans le processeur de traitement 16, assurant la gestion des bits de signalisation (TDS2) quand le transmetteur est en transfert de données, ou mode connecté,
- des mémoires de programmes 18, couplées au processeur de traitement 16,
- deux circuits d'adaptation de niveau 10′ et 11′ pour les circuits d'interface 10 et 11 respectivement, reliés aux prises 2 et 3,
- un circuit de multiplexage 20 relié sélectivement à l'un ou l'autre des circuits d'adaptation de niveau 10′ et 11′, selon le circuit d'interface 10 ou 11 raccordé à la prise concernée, assurant l'acheminement des données émises TD ou reçues RD par le terminal,
- un circuit d'entrée de signaux 21 et un circuit de sortie de signaux 22, contrôlés par le processeur de traitement, assurant la transmission, entre le terminal et le processeur de traitement, des signaux de données RD, TD mais également des états de jonction, des commandes de boucles, des signaux d'émission et réception de signalisation, ainsi que des commandes issues des interrupteurs 6A et 7A.

Une alimentation externe 24, reliée par la prise 4 (figure 1) fournit les niveaux convenables de tension aux différents circuits de transmetteur.

Dans cette figure 3, on a fait apparaître, en outre, des circuits de bouclage 25 et 26, entre le circuit de multiplexage 20 et les circuits d'entrée et de sortie 21 et 22, pour les bouclages précités 3c et 2b selon les flèches indiquées, et le circuit de bouclage 27 entre le circuit prédiffusé de ligne 15 et le processeur de traitement 16, pour le bouclage 3T selon la flèche indiquée. On a simplement illustré par les flèches correspondantes, le bouclage 3b au niveau de l'autocommutateur et un bouclage dit PCM vers l'autocommutateur, réalisé dans le circuit prédiffusé 15 et contrôlé par l'autocommutateur.

Sur le processeur de traitement 16, on a également noté :
- ses deux accès série DX d'émission de données et DR de réception de données, qui sont couplés au circuit prédiffusé 15,
- ses accès D d'émission et réception de données, qui sont couplés aux circuits d'entrée 21 et de sortie 22,
- son accès d'horloge HT pour les données à émettre sur la ligne 13, cette horloge HT étant issue du circuit prédiffusé 15 et délivrée par un circuit logique ET 19,
- son accès d'horloge HB pour les données émises et reçues par l'équipement terminal, cette horloge HB étant générée par le processeur de traitement et appliquée aux circuits 10′ et 11′ pour le contrôle du flot de données aboutissant au terminal.

L'horloge HT est générée par une combinaison de deux signaux issus du circuit prédiffusé : l'un TCK est une horloge à 256 kHz ; l'autre SYC est une impulsion de synchronisation, qui est issue de la détection de l'eb de start de chaque trame reçue de la ligne et qui a une durée égale à 8 périodes de l'horloge précédente à 256 kHz. Cette horloge HT, d'impulsion de durée correspondant à 8 eb de chaque trame de 125 µ s transmise sur la ligne, définit le canal de transmission à 64 kbit/s relié aux accès série DX et DR du processeur de traitement. Elle synchronise ces accès série du processeur de traitement sur l'horloge à 8 kHz du système. Elle est dite horloge de trame. Cette horloge HT est en outre utilisée dans le processeur de traitement 16 pour générer une première interruption, dite interruption série et notée ultérieurement INT SER, après chaque réception des 8 périodes qui la définissent et qui correspondent au canal à 64 kbit/s. Le traitement de ces INT SER est décrit ci-après.

L'horloge HB est élaborée dans le processeur de traitement 16, à partir d'une horloge interne, notée H, à 40 MHz.

Le microprocesseur génère à partir de cette horloge interne H des secondes interruptions, dites interruptions timer et notées ultérieurement INT TIM, à une fréquence double de la fréquence de transmission de données de l'équipement terminal. Le traitement de ces interruptions timer crée alternativement des fronts montants et descendants d'une horloge, qui est l'horloge HB. Cette horloge HB est synchronisée de manière périodique sur l'horloge HT, par synchronisation des interruptions timer sur les interruptions série ainsi qu'expliqué plus en détail ci-après.

Le processeur de traitement 16 assure également un tramage des données selon la norme V110 du CCITT, ou la norme ECMA 102 équivalente des fabricants. Ce tramage est défini en fonction du débit normalisé de l'équipement terminal alors raccordé au transmetteur. Il est effectué au cours du transfert des données des accès D à l'accès série DX, tandis qu'un détramage inverse a lieu au cours du transfert des données de l'accès série DR aux accès D. Il est également précisé ci-après.

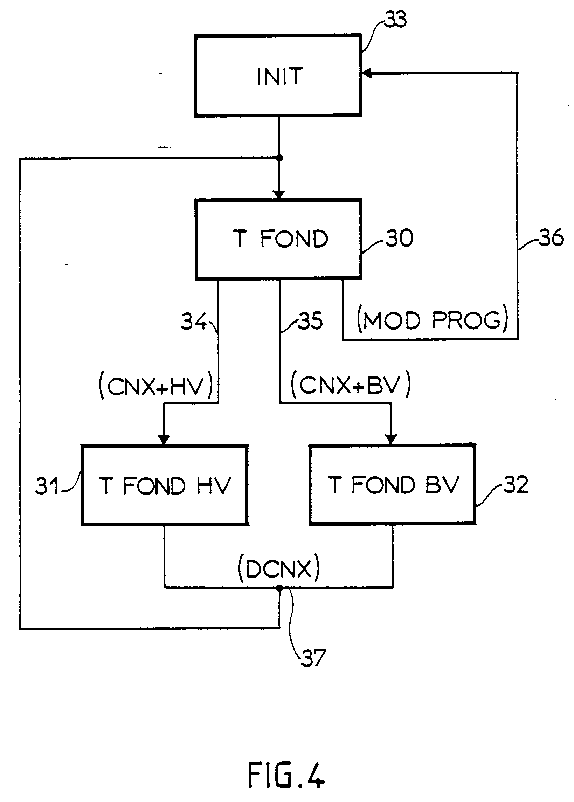

Le programme du processeur de traitement est décrit en se référant aux figures 4 à 17.

La figure 4 montre que ce programme est constitué par trois programmes principaux dits programmes de tache de fond et notés T FOND dans un module 30, T FOND HV dans un module 31 et T FOND BV dans un module 32 et par un programme d'initialisation noté INIT dans un module 33.

Le programme T FOND est actif quand le transmetteur numérique synchrone est au repos, ou mode non connecté.

Le programme T FOND BV est actif quand le transmetteur numérique synchrone est en transfert de données, ou mode connecté, et pour un débit à basse vitesse de l'équipement terminal, c'est-à-dire pour un débit normalisé en V24 ayant l'une des valeurs 600, 1200, 2400, 4800, 9600, 19200 bit/s. Le programme T FOND HV est également actif quand le transmetteur numérique est en mode connecté mais pour un débit à haute vitesse de l'équipement terminal, c'est-à-dire pour un débit normalisé en V35 ou en X21 ayant l'une des valeurs 48, 56, 64 kbit/s.

Cette figure 4 illustre l'enchaînement des modules et les diverses sorties des programmes principaux.

La sortie du module INIT 33 déclenche le module T FOND 30 ; les modules T FOND HV et T FOND BV, 31 et 32 sont sélectivement raccordés au module T FOND 30. Une première sortie 34 du module 30 déclenche le module 31 lors d'une information de connexion et de haut débit détectée, notée (CNX + HV) sur cette sortie 34 ; une deuxième sortie 35 du module 30 déclenche le module 32, lors d'une information de connexion et de bas débit détectée, notée (CNX + BV) sur cette sortie 35. Une troisième sortie 36 du module 30 permet de rentrer dans le module INIT 33, lors d'une information de nouveaux paramètres de programmation de jonction notée (MOD PROG) sur cette sortie.

Une sortie 37 sur chacun des modules 31 et 32 permet le déclenchement du module 30, par une information de déconnexion détectée et notée (DCNX) sur cette sortie.

Les trois programmes principaux des modules 30, 31 et 32 sont en outre interrompus par les routines appelées par les interruptions série INT SER et les interruptions timer INT TIM. Ces routines sont contenues dans d'autres modules précisés ci-après.

Dans les organigrammes des figures suivantes, on a illustré les actions principales réalisées par le programme concerné, ainsi que les opérations principales de décision qui contrôlent l'enchaînement des actions successives. On précise en regard de chaque opération de décision, présentant une sortie négative et une sortie positive, que la sortie négative est celle portant le symbole 0 d'une inversion logique.

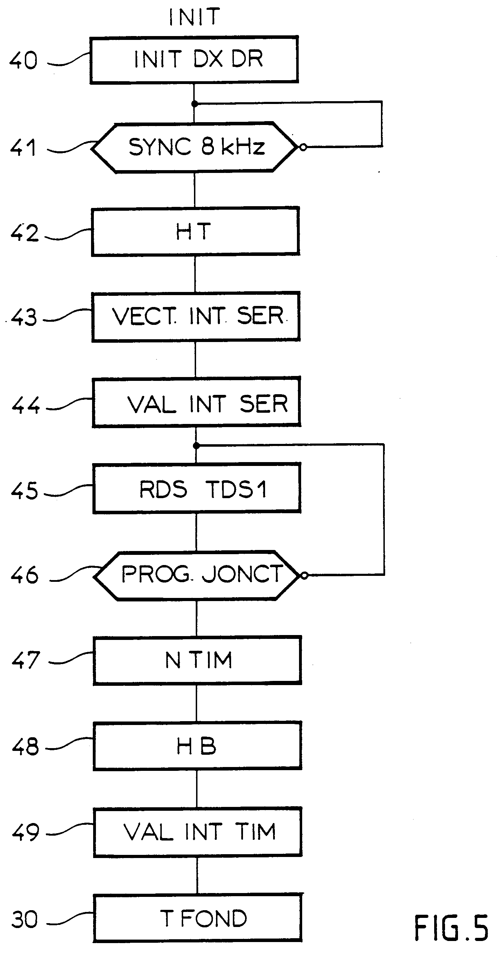

La figure 5 représente l'organigramme du programme du module INIT 33.

Ce programme INIT assure l'initialisation des variables, la synchronisation des accès série DX, DR du processeur de traitement avec les accès série du circuit d'interface de ligne et la génération de l'horloge HB. Les actions successives de ce programme et les opérations de décision qui les contrôlent sont les suivantes :
- initialiser les accès série DX, DR de données, selon une action notée INIT DX, DR, pour définir le mode d'échanges par octets sur ces accès,
- contrôler si l'horloge à 8 kHz du système est repérée, selon une opération 41 notée SYNC 8kHz, cette horloge étant issue de l'autocommutateur et repérée à partir de l'eb de start de chaque message émis par l'autocommutateur, et
   . si cette horloge n'est pas repérée renouveler l'opération, ainsi que traduit par le bouclage de sa sortie négative sur son entrée
   . si cette horloge est repérée passer a l'action suivante (action 42),
- synchroniser les accès série DX, DR sur l'accès série de l'interface de ligne, selon une action 42 notée HT, pour que les 8 périodes à 256 kHz de l'horloge de trame HT correspondent au canal à 64 kbit/s de la ligne, et pour générer une interruption des accès série DX, DR toutes les 125 µs, après réception des 8 périodes à 256 kHz de cette horloge HT,
- "vectoriser" les interruptions série, selon une action 43 notée VECT INT SER, pour le traitement de chaque interruption série à une adresse contenue dans une variable, cette variable étant au départ initialisée par cette action pour le traitement de la première interruption et ensuite modifiée selon le traitement en cours,
- autoriser les interruptions série, selon une action 44 notée VAL INT SER, pour les valider,
- traiter l'émission/réception des codes de signalisation, selon une action 45 notée RDS, TDS1, pour le type d'interface raccordé au transmetteur et déclaré par l'autocommutateur, ce traitement étant assuré sur les interruptions série et permettant de détecter les paramètres de la jonction, c'est-à-dire essentiellement le type d'interface raccordé et la vitesse d'émission/réception de l'équipement terminal raccordé,
- vérifier que la jonction est programmée, selon une opération 46 notée PROG JONCT pour déterminer si les paramètres de la jonction ont été reçus, et
   . si ces paramètres n'ont pas été reçus, renouveler l'action 45, ainsi que traduit par le rebouclage de la sortie négative de cette opération 46 sur l'entrée de l'action 45,
   . si ces paramètres sont reçus passer à l'action suivante,(action 46)
- initialiser la période des interruptions timer, selon une action 47 notée N TIM, la fréquence des interruptions timer étant égale au double de la fréquence d'émission/réception du terminal,
- "vectoriser" les interruptions timer, selon une action 48, notée HB, pour le traitement de chacune des interruptions timer successives à une adresse contenue dans une variable, cette variable étant au départ initialisée par cette action puis ensuite définie successivement à l'adresse de traitement de chaque interruption timer en cours, de manière à générer alternativement les fronts montants et descendants de l'horloge HB, chaque interruption timer générant ainsi un front d'horloge HB et contrôlant également l'interruption timer qui la suit et qui génère le front opposé,
- autoriser les interruptions timer, selon une action 49, notée VAL INT TIM, pour valider l'horloge HB, et
- passer au programme T FOND du module 30.

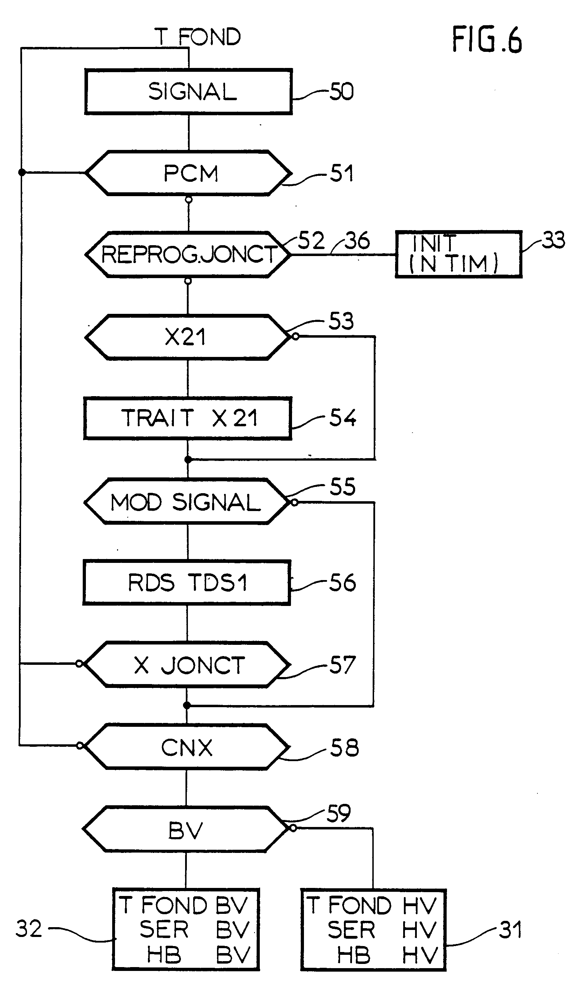

La figure 6 représente l'organigramme du programme T FOND du module 30 de la figure 4.

Ce programme T FOND assure le contrôle des codes transmis dans le canal de signalisation à 8 kbit/s, dits codes de signalisation, le contrôle des circuits de jonction du circuit d'interface, l'observation des interrupteurs 6A, 7A (figure 2) et la détection de connexion du terminal à la ligne.

Ses actions successives et ses opérations de décision sont les suivantes :
- traiter l'émission/réception des codes en signalisation, selon une action 50 notée SIGNAL, pour transmettre à l'autocommutateur les états des circuits de jonction et des interrupteurs et recevoir les commandes qui en découlent et des commandes spécifiques de bouclage PCM et de reprogrammation de la jonction,
- vérifier si le bouclage PCM est en cours, selon une opération 51 notée PCM, et
- si le bouclage PCM est en cours, reboucler sur l'entrée de l'action 50 précédente,
- si cette boucle PCM n'est pas en cours, vérifier une reprogrammation de la jonction, selon une opération REPROG JONCT 52, pour une éventuelle nouvelle définition des paramètres de la jonction, une reprogrammation de la jonction détectée provoquant une sortie de ce programme T FOND, selon la sortie 36 de la figure 4, et le retour à l'action N TIM 47 du programme INIT de la figure 5, et
- si une reprogrammation n'est pas détectée, passer à une opération suivante (opération 53),
- vérifier l'utilisation du circuit d'interface X21 selon l'opération 53 notée X21, et
- si le circuit d'interface X21 est utilisé, effectuer le traitement des états X21 selon l'avis X21 du CCITT, selon une action 54 notée TRAIT X21, et passer à l'opération suivante (opération 55),
- si le circuit d'interface X21 n'est pas utilisé, passer directement à cette opération suivante (opération 55)
- vérifier des changements d'états des circuits de jonction, et/ou des interrupteurs, selon l'opération 55, MOD SIGNAL, et
- si ces états ont changé, préparer la transmission des codes et les transmettre en signalisation, selon une action 56 notée RDS, TDS1,
- vérifier leur transmission, selon une opération 57 notée X JONCT,et

. si ces changements n'ont pas été transmis revenir à l'entrée de T FOND, pour le renouvellement de l'action 52,
- si ces états n'ont pas changé lors de l'opération 55, ou si les changements d'états ont été transmis lors de l'opération 57, vérifier la mémorisation d'une information de connexion issue des codes en signalisation, selon une opération 58 notée CNX, et
- si une information de connexion n'est pas présente, recommencer le programme T FOND ainsi que traduit par le bouclage de la sortie négative de l'opération 58 en entrée de l'action 50,
- si l'information de connexion est mémorisée, vérifier si la vitesse d'émission/réception du terminal appartient aux basses vitesses, selon une opération 59 notée BV, et
- si elle appartient aux basses vitesses, sélectionner le programme T FOND BV du module 32 et "vectoriser" les interruptions série et les interruptions timer pour celle des basses vitesses concernée, pour leurs traitements par des programmes notés SER BV et HB BV,
- si elle n'appartient pas aux basses vitesses, sélectionner le programme T FOND HV du module 32 et "vectoriser" les interruptions série et les interruptions timer pour celle des hautes vitesses concernée, pour leurs traitements par des programmes notés SER HV et HB HV.

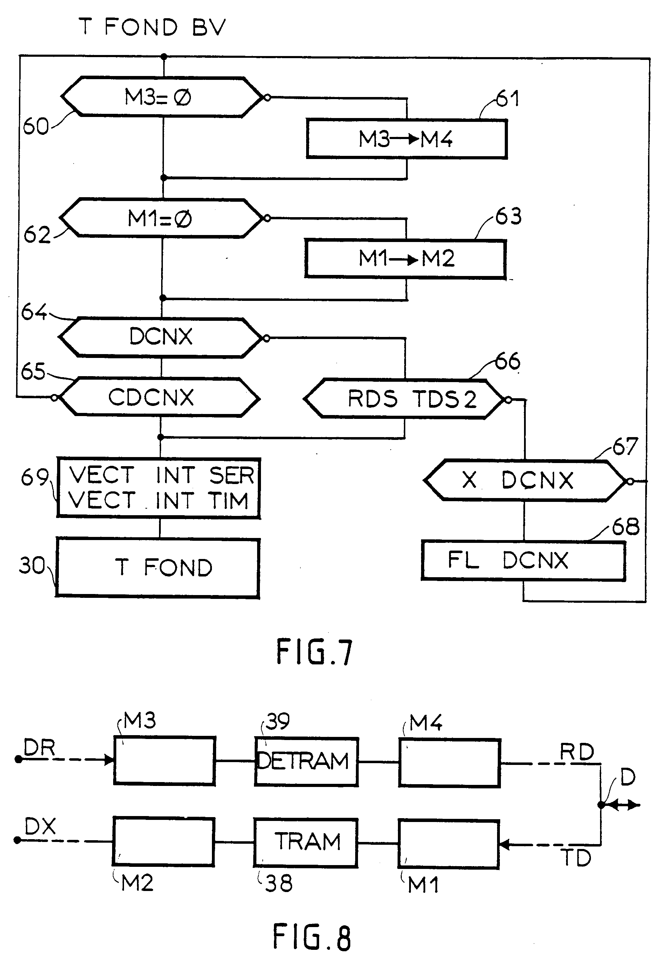

La figure 7 représente l'organigramme du programme T FOND BV du module 32 de la figure 4. Cet organigramme est décrit en relation avec la figure 8 schématisant le mode de couplage, en particulier pour ces basses vitesse, entre les accès D et les accès DX et DR du processeur de traitement (figure 3).

Ce programme T FOND BV assure les transferts des données entre les accès D et les accès DX et DR en utilisant quatre mémoires M1 à M4 de type FIFO (First IN First OUT) et en réalisant un tramage des données reçues du terminal et à émettre en ligne et un détramage inverse dans l'autre sens de transmission, selon la norme V110 du CCITT ou la norme ECMA 102 équivalente des fabricants.

Le tramage est effectué lors du transfert des données de la mémoire M1 couplée aux accès D à la mémoire M2 couplée à l'accès DX ; il est symbolisé par un module TRAM 38 entre ces mémoires dans la figure 8. Le détramage est effectué lors du transfert des données de la mémoire M3 couplée à l'accès DR à la mémoire M4 couplée aux accès D ; il est symbolisé par un module DETRAM 39 entre ces deux mémoires dans la figure 8. Les mémoires M1 à M4 ont une capacité de 16 bits.

Le tramage selon la norme V110 est effectué, pour les débits à basse vitesse allant jusqu'à 19200 bit/s, en 10 octets : le premier et le sixième octets sont caractéristiques de la trame V110 ainsi que le premier bit de chacun des huit autres octets, le dernier bit de chacun de ces huit autres octets traduit quant à lui, en général, l'état de certains circuits de jonction. Ce tramage définit en conséquence 48 positions d'éléments binaires dans les 10 octets, qui sont affectées aux données d'équipement terminal, en effectuant l'adaptation du débit utile de l'équipement terminal au débit en ligne à 64 kbit/s.

Les actions successives et les opérations de programme T FOND BV sont les suivantes :
- vérifier si la mémoire M3 est vide, selon une opération 60 notée M3 = φ, cette mémoire ayant été précédemment remplie sous le contrôle du programme de traitement des interruptions série SER BV, et
- si la mémoire M3 n'est pas vide, détramer selon la norme V110 et charger le résultat dans la mémoire M4 selon une action 61 notée M3→M4,
- si la mémoire M3 est vide, passer à l'opération suivante (opération 62),
- vérifier si la mémoire M1 est vide, selon l'opération 62 M1 = φ, cette mémoire ayant été précédemment remplie sous le contrôle du programme de traitement des interruptions timer HB BV, et
- si la mémoire M1 n'est pas vide, tramer selon la norme V110 et charger le résultat du tramage dans la mémoire M2, selon une action 63 notée M1→M2,
- si la mémoire M1 est vide, passer à l'opération suivante (opération 64)
- vérifier si une procédure de déconnexion est en cours, selon l'opération 64 notée DCNX, engagée par un changement d'état de circuit de jonction ou des interrupteurs, et
- si une procédure de déconnexion est en cours, vérifier si la déconnexion est terminée, selon une opération 65 notée C DCNX, par détection de la réponse ou confirmation de l'équipement distant à travers l'autocommutateur, ou détection d'une temporisation écoulée,
- si la procédure de déconnexion n'est pas détectée en cours par l'opération 64, vérifier la présence d'un code de déconnexion en signalisation, selon une opération 66 notée RDS TDS2, et
- si le code de déconnexion n'est pas détecté présent par l'opération 66, vérifier à nouveau les états des circuits de jonction et des interrupteurs, selon une opération 67 notée X DCNX, pour observer une éventuelle demande de déconnexion émanant du terminal à travers l'un des circuits de jonction correspondant ou émanant de l'utilisateur par les interrupteurs, et
- si ces états ne traduisent toujours pas une procédure de déconnexion en cours, revenir à l'entrée du programme T FOND BV, ainsi que traduit par le bouclage de la sortie négative de l'opération 67 sur l'entrée de l'opération 60, pour la continuité du programme T FOND BV,
- si ces états traduisent par contre une procédure de déconnexion en cours, marquer un drapeau (ou Flag) de déconnexion, selon une action 68 notée FL DCNX, qui est elle-même rebouclée à l'entrée du progamme T FOND BV, ce drapeau de déconnexion permettant de détecter une déconnexion en cours lors de l'opération 64 et de respecter la procédure de déconnexion selon la norme V110,
- si le code de déconnexion est détecté présent par l'opération 66, ou si la déconnexion est détectée terminée par l'opération 65, gérer la déconnexion réalisée, selon une action 69, notée VECT INT SER-VECT INT TIM, selon laquelle on "vectorise" les interruptions série et les interruptions timer pour rentrer à nouveau dans le programme T FOND, et
- exécuter le programme T FOND du module 30.

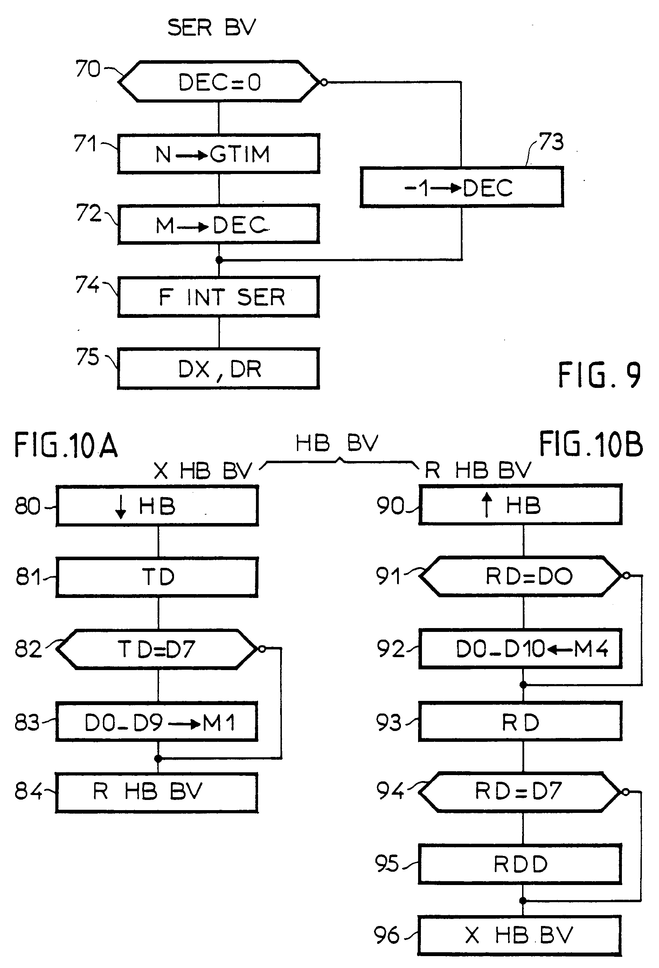

La figure 9 représente l'organigramme du programme dit SER BV de traitement des interruptions série INTER SER, pour les débits à basse vitesse d'équipement terminal raccordé au transmetteur numérique synchrone.

Ce programme SER BV assure périodiquement la resynchronisation de l'horloge HB sur l'horloge HT et gère les accès série DX, DR.

La période de resynchronisation de HB/HT est élaborée précédemment dans le programme INIT à partir de la période des interruptions timer (action 47, figure 5) ; elle donne le nombre minimal M d'interruptions série qui correspond à un nombre P d'interruptions timer. Cette resynchronisation toutes les M interruptions série est effectuée au passage à zéro d'un compteur d'interruptions série ; ce compteur noté DEC dans l'organigramme est chargé à M à chaque passage à zéro de son état, et est décrémenté de 1 par chaque nouvelle interruption série. Il assure également au passage de son état à zéro, le rechargement à N d'un compteur générateur des interruptions timer, noté G TIM et couplé à l'horloge rapide H du processeur qui le commande. Ces compteurs DEC et G TIM sont internes au processeur de traitement, mais n'ont pas été représentés dans la figure 3 ; le compteur DEC est géré par le programme, le compteur G TIM est décrémenté automatiquement par l'horloge H et rechargé à sa période à chaque passage à zéro de son état. Le nombre M est dit période de resynchronisation du compteur DEC et le nombre N période du compteur G TIM.

Les actions successives et les opérations de décision du programme SER BV sont les suivantes :
- vérifier si une resynchronisation est à effectuer, selon une opération 70 notée DEC = 0, selon laquelle on détecte l'état zéro du compteur DEC des interruptions série, et
- si le compteur DEC n'est pas à zéro, décrémenter de 1 son état à chaque interruption série, selon une action 73 notée - 1→DEC, et passer à une action suivante (action 74),
- si le compteur DEC est détecté à zéro, recharger le compteur G TIM à sa période N, selon une action 71 notée N→G TIM,
- recharger le compteur DEC à sa période M, selon une action 72 notée M→DEC,
- marquer un drapeau d'interruption série, selon l'action 74 notée F INT SER, le marquage de ce drapeau correspondant à un traitement des codes en signalisation,
- assurer l'émission/réception des données sur les accès DX, DR, selon une action 75 notée DX, DR, cette action correspondant en regard de la figure 8, au déchargement des données tramées de la mémoire M2 pour leur émission en ligne et au chargement des données tramées reçues de la ligne dans la mémoire M3, qui sont assurés sur les fronts descendants des huits coups à 256 kHz de l'horloge HT pour le déchargement de la mémoire M2, et sur les fronts montants, pour le chargement de la mémoire M3.

La fin du traitement de chaque interruption série provoque le retour dans le programme T FOND BV.

En regard de cet organigramme SER BV et à titre d'exemple pour un équipement terminal à 19 200 bit/s, pour lequel la fréquence des interruptions timer est de 38 400 Hz, on précise que 5 interruptions série correspondent à 24 interruptions timer, soit M = 5 et P = 24.

Les figures 10A et 10B représentent les organigrammes des deux programmes appelés alternativement et dits routines de traitement des interruptions timer successives. Ces deux programmes sont notés X HB BV et R HB BV et sont exécutés alternativement pour constituer ensemble le programme de l'horloge timer aux basses vitesses, HB BV.

Ce programme résultant HB BV permet, par ses deux programmes ou routines, la génération des fronts successifs de l'horloge HB sur les interruptions timer, ainsi que la transmission dans un sens et dans l'autre des données TD, RD entre le processeur de traitement et l'équipement terminal. Il est décrit en se référant également à la figure 8 montrant les deux mémoires M1 et M4 qu'il utilise pour la récupération des données TD émises par le terminal, qui sont chargées dans la mémoire M1, et l'émission des données RD vers le terminal, qui sont lues dans la mémoire M4. On précise que la mémoire M1 est chargée par mot de 10 bits D0-D9, chacun constitué d'un octet D0-D7 de données TD et des 2 états de circuits de jonction (circuits 108 et 105 - figure 2) issus d'échantillonnage des circuits d'émission aux accès D et que la mémoire M4 est lue par mot de 11 bits D0-D10 constitué d'un octet de données RD et de 3 états de circuits de jonction (circuits 106, 107, et 109) émis sur le circuit de réception aux accès D et sur les circuits de jonction.

Les actions successives et les opérations de décision du programme X HB BV de la figure 10A, traitant une interruption timer, donnant lieu à un front descendant de l'horloge HB, sont les suivantes :
- générer le front descendant de l'horloge HB, selon une action 80, noté ↓ HB, la génération de ce front d'horloge étant issue, pour la première interruption timer, de la "vectorisation" des interruptions timer réalisée dans le programme T FOND (figure 6 action 32), et pour les suivantes, de la "vectorisation" réalisée par le programme R HB BV de la figure 10B,
- échantillonner le circuit d'émission aux accès D sur ce front d'horloge, selon une action 81, notée TD,
- vérifier si ce bit échantillonné est le huitième d'un octet D0-D7 en cours de formation selon une opération 82 notée TD = D7, et
- si ce bit est le huitième, charger l'octet préparé D0-D7 et 2 bits d'état de jonction dans la mémoire M1, selon une action 83 notée D0-D9→M1,
- si ce bit n'est pas le huitième ou après chargement de la mémoire M1, "vectoriser" le traitement de l'interruption timer suivante à R HB BV, selon une action 84 notée R HB BV.

La fin du traitement de cette interruption timer qui a déclenché ce programme X HB BV, provoque le retour dans le programme T FOND BV.

Les actions successives et les opérations de décision du programme R HB BV de la figure 108, traitant l'interruption timer qui suit celle traitée par le programme X HB BV et donne lieu à un front montant de l'horloge HB, sont les suivantes :
- générer le front montant de l'horloge HB, selon une action 90 notée ↑ HB, cette action découlant comme l'action 80 de la figure 10A de la "vectorisation" des interruptions timer, effectuée dans le programme X HB BV,
- vérifier si le bit à émettre RD est le premier bit d'un nouvel octet de données à émettre vers le terminal, selon une opération 91 notée RD = D0, et
- si ce bit est le premier d'un nouvel octet à émettre, lire un mot le contenant de la mémoire M4 selon une action 92 notée D0-D10←M4,
- émettre un bit, selon une action 93, notée RD,
- si ce bit à émettre n'est pas le premier d'un nouvel octet à émettre, émettre ce bit du mot lu selon l'action 93 notée RD, ainsi que traduit par la sortie négative de l'opération 91 reliée à l'entrée de l'action 93,
- vérifier si le bit émis est le huitième de l'octet à émettre vers le terminal, selon une opération 94, notée RD = D7, et
- si ce bit est le huitième de l'octet de données, émettre les états des circuits de jonction, selon une action 95 notée RDD,
- si ce bit émis n'est pas le huitième ou après l'action 95, vectoriser le traitement de l'interruption timer suivante à X HB BV, selon une action 96 notée X HB BV.

la fin du traitement de cette interruption timer, qui a déclenché ce programme R HB BV, provoque le retour dans le programme T FOND BV.

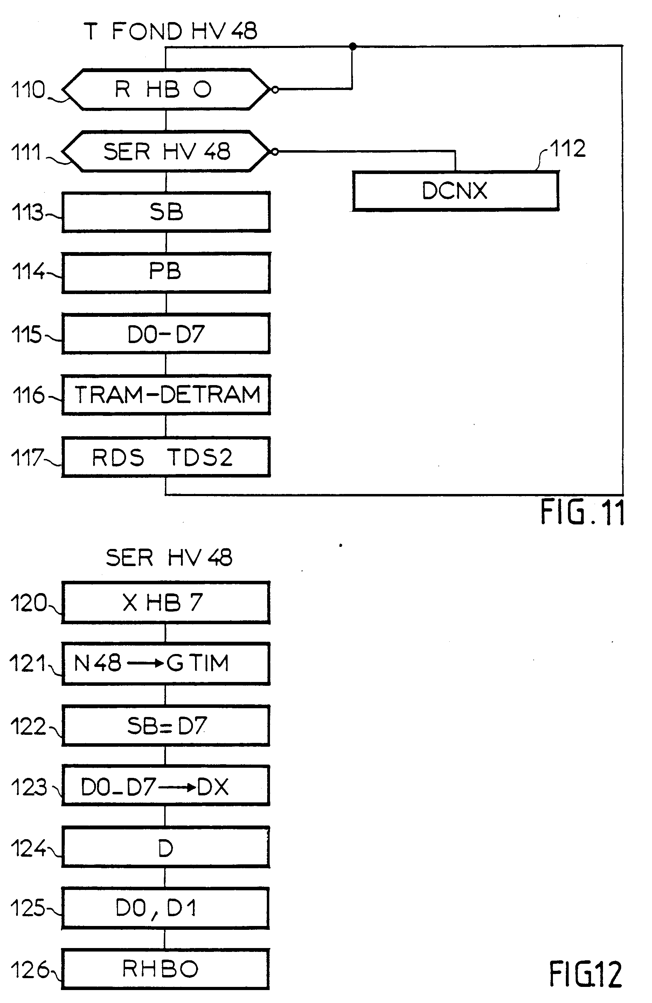

La figure 11 représente l'organigramme du programme T FOND HV 48 du module 31 de la figure 4.

Ce programme prépare les transferts entre les accès D et les accès DX et DR en réalisant le tramage et le détramage inverse des données, selon la norme V110 pour le débit à 48 kbit/s de l'équipement terminal raccordé au transmetteur numérique.

Ce tramage selon la norme V110, pour le débit à 48 kbit/s, est effectué par octets successifs D0-D7, chacun formé de six bits de données accompagnés d'un bit de préfixe PB dit de synchronisation et caractéristique de tramage et d'un bit de suffixe SB caractéristique du tramage et/ou de l'état de la connexion (circuit 103). Il permet en conséquence l'adaptation du débit utile de l'équipement terminal de 48 kbit/s au débit en ligne à 64 kbit/s, pour une transmission en transparence des données RD TD.

Les actions successives et opérations de décision de ce programme T FOND HV 48 sont les suivantes :
- vérifier si le traitement de la première interruption timer, qui suit l'interruption série et qui génère le front montant de l'horloge HB HV d'émission d'un bit vers le terminal, a été effectué, selon une opération 110, notée R HB0, la sortie négative de cette opération étant rebouclée sur son entrée pour traduire alors le renouvellement de l'opération, le programme R HB HV étant expliqué ci-après, et
- si cette première interruption timer a été traitée, vérifier si le traitement de l'interruption série a été effectué, selon une opération 111 notée SER HV 48, ce traitement étant réalisé par le programme SER HV 48 décrit ci-après, l'absence d'une telle interruption série qui n'a pas déclenché son traitement correspondant étant significative de la déconnexion de l'équipement terminal distant, et
- si cette interruption série n'a pas été traitée, déconnecter le terminal, selon une action 112 notée DCNX, réalisée au bout d'une temporisation écoulée,
- si cette interruption série a été traitée, préparer le huitième bit de l'octet en cours de formation, selon une action 113 notée SB, le bit SB étant fonction des états des circuits de jonction, et issu d'échantillonnage de l'état du circuit de jonction 105 ou 108 (figure 2),
- préparer le premier bit de l'octet suivant celui en cours de formation, selon une action 114 notée PB, ce bit étant caractéristique du tramage,
- traiter l'octet reçu lors de l'interruption série selon une action 115, notée D0-D7, pour vérifier la présence du bit PB dit de synchronisation de trame V110 et la valeur du bit SB,
- gérer les phases successives de tramage et détramage selon la procédure de la norme V110 pour le débit à 48 kbit/s, selon une action 116 notée TRAM-DETRAM,
- gérer les états des interrupteurs 6A, 7A et des circuits de jonction selon une action 117 notée RDS TDS2, pour leur transmission ultérieure.

Ce programme T FOND HV 48 est rebouclé sur lui-même pour sa continuité.

La figure 12 représente l'organigramme du programme SER HV 48 de traitement des interruptions série pour ce débit à 48 kbit/s. Il assure la resynchronisation de l'horloge HB sur l'horloge HT par génération d'un front descendant de l'horloge HB, le tramage selon la norme V110 pour le débit à 48 kbit/s, et gère les accès série DX, DR de transmission sur la ligne numérique.

La resynchronisation de l'horloge HB a lieu à chaque interruption série, l'intervalle de temps entre deux interruptions série correspondant à 12 interruptions timer de fréquence égale à 96 000 Hz ; elle est effectuée par remplacement de la douzième interruption timer par l'interruption série qui arrive, en utilisant un compteur générant les interruptions timer de fréquence à 96 000 Hz, interne au processeur de traitement et noté G TIM, comptant un nombre N48 d'impulsions de l'horloge rapide H du processeur. Le nombre N48 est dit période de ce compteur.

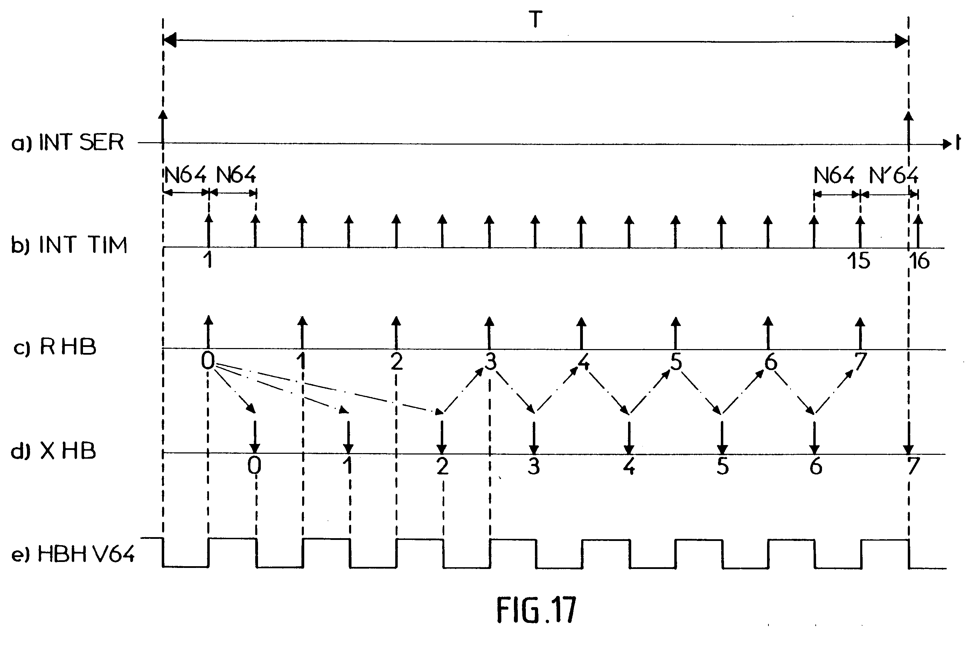

Les actions successives du programme SER HV 48 sont les suivantes :
- générer un front descendant de l'horloge HB, selon une action 120 notée X HB7,
- recharger le compteur G TIM à sa période N48, selon une action 121, notée N48→G TIM, pour la génération théorique de 12 interruptions timer, ainsi qu'il sera précisé en regard de la figure 17,
- ajouter le huitième bit SB à l'octet en cours de formation, selon une action 122 notée SB = D7,
- émettre cet octet D0-D7 vers les accès série DX et recevoir l'octet issu de l'accès série DR, selon une action 123 notée D0-D7→DX,
- échantillonner les accès D pour récupérer le bit TD, selon une action 124 notée D,
- placer les bits PB et TD en positions D0 et D1, respectivement du nouvel octet en cours de formation, selon une action 125 notée D0, D1,
- vectoriser la première interruption timer suivante à un programme R HB0, contenant lui-même la variable de vectorisation de l'interruption timer suivante pour ce programme SER HV 48, selon une action 126 notée R HB0 ainsi qu'expliqué en regard du diagramme de la figure 17.

La fin de ce traitement provoque le retour au programme T FOND HV 48.

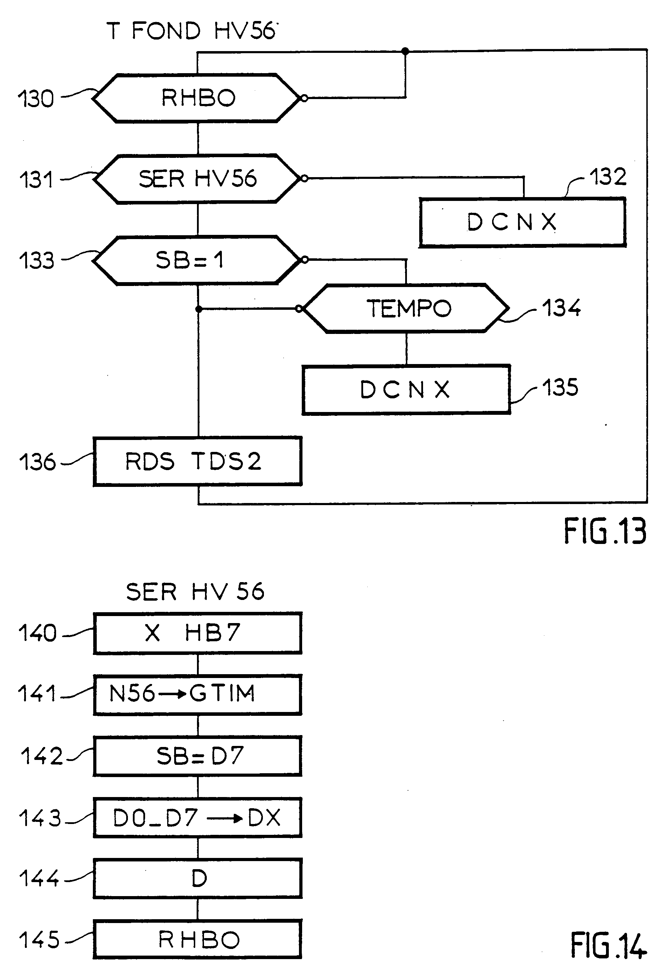

La figure 13 représente l'organigramme du programme T FOND HV 56 du module 31 de la figure 4, pour le débit à 56 kHz de l'équipement terminal raccordé au transmetteur numérique synchrone.

Ce programme T FOND HV 56 assure simplement l'observation des états des interrupteurs et des circuits de junction pour définir l'état de la junction, c'est-à-dire les demandes éventuelles de déconnexion et de bouclage. Il surveille aussi la présence d'un bit de synchronisation SB, explicité ci-après.

L'adaptation de débit est effectuée par le programme SER HV 56 par octets successifs D0-D7, chacun formé de sept bits de données accompagnés d'un bit de suffixe SB dit de synchronisation, SB = 1, pour une transmission en transparence des données.

Les actions et les opérations de décision de ce programme T FOND HV 56 sont les suivantes :
- vérifier si le traitement de la première interruption timer qui suit l'interruption série et qui génère le front montant de l'horloge HB HV d'émission des bits vers le terminal a été effectué, selon une opération 130, notée R HB0, dont la sortie négative est reliée sur son entrée, pour traduire alors le renouvellement de cette opération, et
- si cette première interruption timer a été traitée, vérifier si le traitement de l'interruption série a été effectué selon une opération 131, notée SER HV 56, ce traitement étant expliqué en regard de la figure 14, et
- si cette interruption série n'a pas été traitée, déconnecter selon une action 132 notée DCNX analogue à l'action 112 de la figure 11,
- si cette interruption série a été traitée, vérifier que le bit de suffixe d'un octet reçu est significatif du synchronisme du tramage V110 à 56 kbit/s, selon une opération 133 notée SB = 1, et
- si SB est différent de 1, vérifier l'écoulement d'une temporisation déclenchée par chaque interruption série, selon une opération 134 notée TEMPO, cette temporisation de l'ordre 3 ms étant significative d'une déconnexion de l'équipement distant, et
- si cette temporisation est écoulée, déconnecter, selon une action 135, analogue à l'action 132 et notée DCNX,
- si SB est égal à 1, gérer les états des interrupteurs et des circuits de jonction, selon une action 136 notée RDS TDS2 pour leur transmission en signalisation.

Ce programme T FOND HV 56 est rebouclé sur lui-même pour sa continuité.

La figure 14 représente l'organigramme du programme SER HV 56 de traitement des interruptions série pour le débit utile de 56 kbit/s de l'équipement terminal. Il assure la resynchronisation de l'horloge HB sur l'horloge HT, le tramage selon la norme V110 pour le débit de 56 kbit/s et gère les accès série DX et DR pour l'émission/réception à travers la ligne numérique.

La resynchronisation de l'horloge HB a lieu à chaque interruption série, l'intervalle de temps entre deux interruptions série, de 125 µs, correspondant dans ce cas à 14 interruptions timer de fréquence égale à 112 kHz ; elle est effectuée par remplacement de la 14è interruption timer par l'interruption série qui arrive. Le programme utilise un compteur générant les interruptions timer, interne au processeur de traitement et noté G TIM, comptant un nombre N56 d'impulsions de l'horloge rapide H du processeur de traitement. Ce nombre N56 est dit période du compteur G TIM pour ce programme.

Les actions successives de ce programme SER HV 56 sont les suivantes :
- générer un front descendant de l'horloge HB, selon une action 140 notée X HB7,
- charger le compteur G TIM à sa période N56 selon une action 141 notée N56→G TIM pour la génération théorique de 14 interruptions timer, ainsi qu'expliqué en regard de la figure 17,
- ajouter le bit de suffixe SB à l'octet en cours de formation, selon une action 142 notée S.B = D7,
- émettre l'octet vers les accès série DX et récupérer l'octet issu de l'accès série DR, selon une action 143 notée D0-D7→DX,
- échantillonner les accès D pour récupérer le premier bit TD d'un nouvel octet, selon une action 144, notée D,
- "vectoriser" la première interruption timer suivante à un programme R HB0 contenant lui-même la variable de vectorisation de l'interruption timer suivante pour ce programme SER HV 56, selon une action 145 notée R HB0 et expliquée en regard de la figure 17.

La fin de ce traitement provoque le retour dans le programme T FOND HV 56.

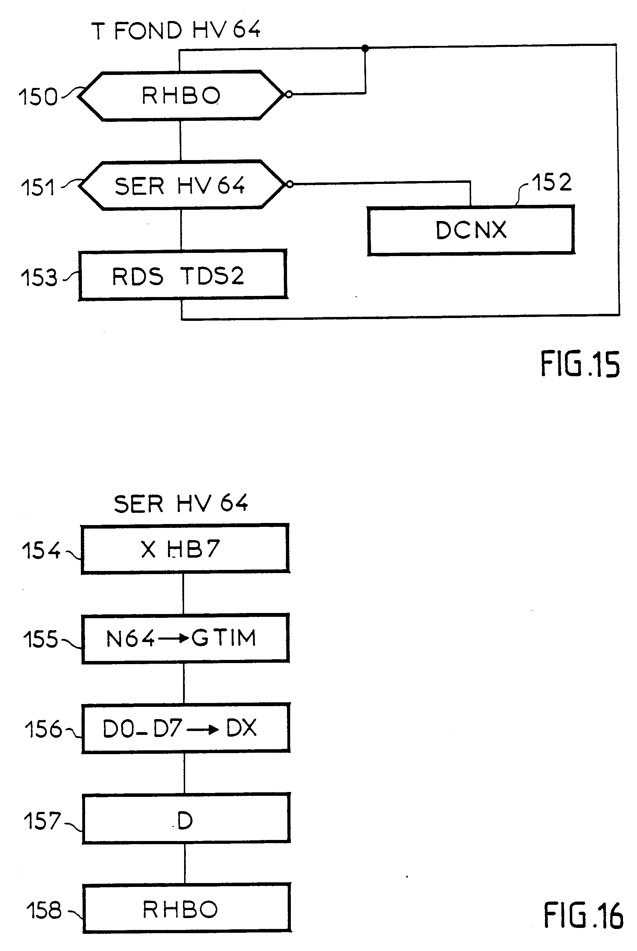

La figure 15 représente l'organigramme du programme T FOND HV 64 du module 31 de la figure 4 pour le débit de 64 kbit/s d'équipement terminal. Il assure uniquement l'observation des états des circuits de jonction et des interrupteurs.

Les actions et opérations de décision du programme T FOND HV 64 sont les suivantes :
- vérifier si le traitement de la 1ère interruption timer, qui suit l'interruption série et qui génère le front montant correspondant de l'horloge HB HV d'émission des bits vers le terminal a été effectué, selon une opération 150 notée R HB0, la sortie négative de cette opération rebouclée sur son entrée traduisant le renouvellement de l'opération jusqu'à ce que cette interruption timer ait été traitée et,
- si cette interruption timer a été traitée, vérifier si le traitement de l'interruption série a été effectué, selon une opération 151 notée SER HV 64, ce traitement étant effectué par le programme SER HV 64 décrit en regard de la figure 16, et
- si ce traitement de l'interruption série n'est pas effectué, déconnecter, selon une action 152 notée DCNX ;
- si ce traitement de l'interruption série a été effectué, gérer les états des interrupteurs et des circuits de jonction, selon une action 153 notée RDS TDS2, pour leur transmission en signalisation si un changement est significatif d'une déconnexion demandée.

Le programme T FOND 64 est rebouclé sur lui-même pour sa continuité.

La figure 16 représente l'organigramme du programme SER HV 64 de traitement des interruptions série pour le débit utile de 64 kbit/s; Il assure la resynchronisation de l'horloge HB sur l'horloge HT, et la transmission en transparence des données de l'équipement terminal sur la ligne.

La synchronisation de l'horloge HB a lieu à chaque interruption série, l'intervalle entre deux interruptions série correspondant à 16 interruptions timer successives. Elle est effectuée par remplacement de la 16ème interruption timer par l'interruption série qui arrive. Le programme utilise un compteur G TIM générant les interruptions timer par comptage d'un nombre N64 d'impulsions de l'horloge rapide H du processeur de traitement. Ce nombre N64 est dit période du compteur G TIM.

Les actions successives du programme SER HV 64 sont :
- générer un front descendant de l'horloge HB, selon une action 154 notée X HB7 ,
- charger le compteur G TIM à sa période N64, selon une action 155 notée N64→G TIM, pour la génération théorique des 16 interruptions timer en 125 µs,
- émettre l'octet D0-D7 sur les accès DX et récupérer l'octet issu des accès DR, selon une action 156 notée D0-D7→DX,
- échantillonner les accès D pour récupérer le premier bit TD d'un nouvel octet selon une action 157 notée D,
- vectoriser la première interruption timer suivante à un programme R HB0 pour ce programme SER HV 64, selon une action 158 notée R HBO et expliquée dans la figure 17.

La fin de ce traitement provoque le retour dans le programme T FOND HV 64.

Les diagrammes de la figure 17 ont été donnés, de préférence aux différents programmes de traitement des interruptions timer, pour illustrer les traitements au débit de 64 kbit/s. Les traitements aux débits de 48 kbit/s et 56 kbit/s sont également expliqués à partir de ces diagrammes;
Ces diagrammes montrent
- en a) la génération d'interruptions série INT SER réalisée à la période T = 125 µs,
- en b) la génération des interruptions timer successives INT TIM par le compteur G TIM, qui sont à la période N64 pour les quinze interruptions timer 1 à 15 qui suivent chaque interruption série et N′64 pour l'interruption timer 16, avec N64 = T/16 et N′64 légèrement supérieur à T/16,
- en c) et en d) la génération alternée des huit fronts montants R HB et des sept fronts descendants X HB sur les interruptions timer successives, ces fronts étant notés R HB0 à 7 et X HB0 à 7 pour les octets de trame transmis dans un sens et de l'autre entre le terminal et le processeur de traitement, avec le huitième front descendant X HB7 généré par l'interruption série,
- en e) l'horloge HB HV 64 correspondante.

Le front descendant X HB7 est issu de l'interruption série qui remplace l'interruption timer 16 retardée. Il est calé sur l'interruption série pour la resynchronisation de l'horloge HB sur les interruptions série et donc sur l'horloge HT.
Ces diagrammes font comprendre que l'horloge HB HV 64 est issue de programmes R HB et X HB appelés alternativement pour traiter les interruptions timer successives. Chacun de ces programmes génère un front montant ou descendant d'horloge HB et émet ou échantillonne le bit correspondant de données de chaque octet. L'enchaînement des programmes de traitement des interruptions timer résulte de la vectorisation des interruptions timer pour le débit considéré.

Les programmes de traitement R HB d'émission de données vers le terminal sont :
- un programme R HB0 appelé par la variable définie initialement lors de la vectorisation des interruptions timer pour le débit considéré ; ce programme est spécifique pour chacun des débits possibles de 64, 56, 48 kbit/s. Il vectorise le traitement de l'interruption timer suivante au programme X HB0 pour 64 kbit/s, au programme X HB1 pour 56 kbit/s, et au programme X HB2 pour 48 kbit/s, ainsi qu'illustré par les flèches en traits mixtes entre les diagrammes c) et d),
- un programme R HBn dit routine de traitement, avec n variable depuis 0, 1 ou 2, selon les trois valeurs de débits possibles, jusqu'à 6, qui vectorise le traitement de l'interruption timer suivante au programme X HBn,
- un programme R HB7 qui modifie la période théorique N64, N56 ou N48 du compteur G TIM pour son rallongement.
   Les programmes de traitement X HB de réception de données émises par le terminal sont :
- un programme X HBn dit routine, qui est appelé pour le premier exécuté, XHB0 ou X HB1 ou X HB2 selon les débits, par le programme R HB0 et qui vectorise le traitement de l'interruption timer suivante à R HB n+1, soit de R HB1 ou R HB2 ou R HB3 jusqu'à R HB7.

On comprend aussi, en regard de ces diagrammes et au vu de l'interruption série remplaçant la dernière interruption timer, que l'action de rechargement du compteur G TIM à sa période théorique N64, N56 ou N48, selon le cas, est rendue nécessaire par la modification précédente effectuée par le programme R HB7.

Des diagrammes de la figure 17, on comprend aussi que l'horloge HB HV 48 est issue du traitement de 11 interruptions timer et de l'interruption série qui remplace la 12è interruption timer, et que l'horloge HB HV 56 est issue du traitement de 13 interruptions timer et de l'interruption série qui remplace la 14è.

## Revendications

1. Transmetteur numérique synchrone, pour la transmission de données entre un équipement terminal (10, 11) présentant un circuit d'interface normalisé et un autocommutateur numérique privé multiservice (12), à travers une ligne de transmission numérique, ledit autocommutateur accèdant lui-même au réseau commuté, le transmetteur numérique comportant :
- un circuit d'interface de ligne (14), assurant la modulation et la démodulation de signaux numériques transmis sur ladite ligne,
- un circuit de multiplexage (15) couplé au circuit d'interface de ligne, assurant le multiplexage et le démultiplexage des signaux dans différents canaux de la ligne, pour un échange en alternat de messages dans une trame de 125 µs, l'un desdits canaux étant un canal dit de signalisation et l'un des autres un canal à 64 kbit/s affecté à la transmission des données,
- des moyens (15, 18) élaborant une horloge de trame (HT) définissant ledit canal à 64 kbit/s de la ligne,
- des moyens de traitement des données et de signaux de signalisation pour leur transmission dans un sens et l'autre à l'autocommutateur, à travers la ligne numérique, et à l'équipement terminal,
ledit transmetteur numérique étant caractérisé
- en ce qu'il est équipé d'au moins une première prise (2, 3), pour le raccordement sélectif audit transmetteur de l'un des circuits d'interface V24, V35/V24, X21 d'équipements terminaux de différents débits normalisés, et en ce qu'il comporte, en outre
- des moyens (16) pour générer une horloge bits (HB) de fréquence égale, à une légère survitesse près, à celle des données de l'équipement terminal raccordé au transmetteur, et dont les fronts montants (R HB) contrôlent la transmission de données dans un sens et les fronts descendants (X HB) la transmission de données dans l'autre sens, entre le transmetteur numérique et l'équipement,
- et des moyens de synchronisation (16) de ladite horloge bits (HB) sur ladite horloge de trame (HT), de période de synchronisation élaborée à partir du débit de l'équipement terminal raccordé par rapport à la fréquence de l'horloge de trame (HT), assurant à chaque période de synchronisation le recalage du front correspondant de l'horloge bits (HB) par rapport à l'horloge de trame (HT).

2. Transmetteur numérique synchrone selon la revendication 1, caractérisé en ce qu'il est équipé de deux prises, l'une étant une prise V24 (2) et l'autre une prise X21 (53).

3. Transmetteur numérique synchrone selon l'une des revendication 1 et 2, caractérisé en ce que
- lesdits moyens pour générer l'horloge bits (HB) comportent :
. des premiers moyens (47) générant des premières interruptions dites interruptions timer INT TIM, de fréquence double, à une légère survitesse près, de celle des données d'équipement terminal raccordé,
. et des deuxièmes moyens de traitement (48, HB BV, HB HV) desdites interruptions timer INT TIM, générant les fronts opposés successifs de ladite horloge bits (HB) sur les interruptions timer successives, avec le traitement de l'une des interruptions timer générant l'un des fronts de l'horloge bits (HB) et contrôlant le traitement de l'interruption timer qui la suit et qui génère le front opposé suivant de l'horloge bits (HB),
- et lesdits moyens de synchronisation de ladite horloge bits (HB) sur ladite horloge de trame (HT) comportent :
. des troisièmes moyens (42) générant des deuxièmes interruptions dites interruptions série INT SER, chacune après chaque impulsion définissant le canal à 64 kbit/s de l'horloge de trame (HT), les interruptions série ayant une période T de 125 µs, et
. des quatrièmes moyens de traitement (43, SER BV, SER HV desdites interruptions série INT SER, provoquant à la première coïncidence prévue entre l'une des interruptions série INT SER et l'une des interruptions timer INT TIM, la génération forcée du front correspondant de l'horloge bits (HB).

4. Transmetteur numérique synchrone selon la revendication 3, caractérisé en ce que lesdits premiers, deuxièmes, troisièmes et quatrièmes moyens sont définis dans un processeur de traitement (16) présentant d'une part des accès série (DX, DR), couplés à ladite ligne, à travers ledit circuit de multiplexage (15) et ledit circuit d'interface de ligne (14), et gérés par lesdites quatrièmes moyens de traitement des interruptions série (SER BV, SER HV), pour la transmission des données et de codes de signalisation en ligne, et d'autre part des accès (D), couplés à l'équipement terminal raccordé et à son circuit d'interface et gérés par lesdits deuxièmes moyens de traitement des interruptions timer (HB BV, HB HV) pour la transmission des données et d'états de circuits de jonction du circuit d'interface, dans un sens et l'autre, entre l'équipement terminal et le processeur de traitement.

5. Transmetteur numérique synchrone selon la revendication 4, caractérisé en ce qu'il comporte, en outre, des cinquièmes moyens (T FOND BV, T FOND HV) associés auxdits deuxièmes et quatrièmes moyens (SER BV, SER HV ; HB BV, HB HV), assurant les transferts des données entre les accès (D) et les accès série (DX, DR), en réalisant un tramage et un détramage inverse selon le sens du transfert, pour adapter les différents débits normalisés de données au débit en ligne à 64 kbit/s, quand ces débits sont inférieurs à 64 kbit/s.

6. Transmetteur numérique synchrone selon la revendication 5, caractérisé en ce qu'il comporte, en outre, des sixièmes moyens (T FOND), pour assurer le contrôle des codes de signalisation et des états des circuits de jonction et d'interrupteurs (6A, 7A) de commande de bouclages spécifiques et de connexion/déconnexion, lesdits sixièmes moyens étant couplés auxdits cinquièmes moyens (T FOND BV, T FOND HV) et les commandant, lors de la détection d'une information de connexion dans les codes et états qu'ils contrôlent.

7. Transmetteur numérique synchrone selon la revendication 6, caractérisé en ce que lesdits quatrièmes moyens de traitement des interruptions série (SER BV, SER HV) et lesdits deuxièmes moyens de traitement des interruptions timer (HB BV, HB HV) sont spécifiques à différentes gammes de débits normalisés prédéterminées et sélectionnées en conséquence par une opération de sélection (59) interne auxdits sixièmes moyens (T FOND).

8. Transmetteur numérique synchrone selon la revendication 7, caractérisé en ce que, lesdits quatrièmes moyens de traitement des interruptions série (SER BV), spécifiques à une gamme à basse vitesse des débits, comportent un premier compteur des interruptions série (DEC), de période de comptage M, et un deuxième compteur générateur des interruptions timer (G TIM), couplé à une horloge rapide (H) et de période de comptage N, avec M étant le nombre minimal d'interruptions série auquel correspondent P interruptions timer, sensiblement à la période N, et définissant la période de synchronisation de l'horloge bits (HB) sur l'horloge de trame (HT), ledit premier compteur contrôlant la génération de la Pième interruption timer lors de la détection de la Mième interruption série.

9. Transmetteur numérique synchrone selon la revendication 7, caractérisé en ce que lesdits quatrièmes moyens de traitement des interruptions série (SER HV), spécifiques à une gamme haute vitesse de débit normalisé des données pour laquelle la période des interruptions série correspond à un nombre entier d'interruptions timer, comportent un compteur générateur desdites interruptions timer (G TIM) couplé à une horloge rapide (H) pour le comptage des impulsions de ladite horloge rapide, et dont la période de comptage est chargée, à chaque interruption série, à une valeur définie (N48, N56, N64) correspondant à la génération du nombre entier d'interruptions timer sur chaque période des interruptions série, et est modifiée, pour son allongement, par lesdits deuxièmes moyens de traitement des interruptions timer (HB HV), lors du traitement de l'avant dernière des interruptions timer de chaque période des interruptions série.

## Patentansprüche

1. Synchroner digitaler Übertrager für die Übertragung von Daten zwischen einem Endgerät (10, 11), das einen genormten Schnittstellenkreis enthält, und einer dienstintegrierten digitalen Nebenstellen-Vermittlungsanlage (12) über eine digitale Übertragungsleitung, wobei die Vermittlungsanlage ihrerseits zu einem öffentlichen Netz Zugang hat und der digitale Übertrager enthält:
- einen Leitungsschnittstellenkreis (14), der die Modulation und Demodulation von auf der Leitung übertragenen digitalen Signale gewährleistet,
- einen Multiplexierkreis (15), der mit dem Leitungsschnittstellenkreis gekoppelt ist und die Multiplexierung sowie Demultiplexierung der Signale in verschiedenen Kanälen der Leitung für einen Nachrichtenaustausch im Wechselbetrieb und in einem Rahmen von 125 µs gewährleistet, wobei einer der Kanäle ein Signalisationskanal und einer der anderen Kanäle ein Kanal mit 64 kbit/s für die Datenübertragung ist,
- Mittel (15, 18), um einen Rahmentakt (HT) zu erarbeiten, der den Kanal mit 64 kbit/s der Leitung definiert,
- Mittel zur Verarbeitung der Daten und von Signalisationssignalen im Hinblick auf ihre Übertragung in einer oder der anderen Richtung zur Vermittlungsanlage, über die digitale Leitung und zum Endgerät,
dadurch gekennzeichnet, daß der Übertrager mindestens einen ersten Anschluß (2, 3) zum selektiven Anschluß eines der Schnittstellenkreise V24, V35/V24, X21 von Endgeräten verschiedener Normdurchsätze an den Übertrager besitzt, und daß weiter:
- Mittel (16) zur Erzeugung eines Takts (HB) vorgesehen sind, dessen Frequenz abgesehen von einer geringfügigen Geschwindigkeitserhöhung der der Daten des an den Übertrager angeschlossenen Endgeräts entspricht und dessen Vorderflanken (R HB) die Datenübertragung in einer Richtung und deren Rückflanken (X HB) die Datenübertragung in der anderen Richtung zwischen dem digitalen Übertrager und dem Endgerät kontrollieren,
- sowie Synchronisiermittel (16) zur Synchronisierung des Bittakts (HB) auf den Rahmentakt (HT) vorgesehen sind, wobei die Synchronisierperiode des Bittakts ausgehend vom Durchsatz des angeschlossenen Endgeräts bezüglich der Frequenz des Rahmentakts (HT) erarbeitet wird, wodurch in jeder Synchronisierperiode die entsprechende Flanke des Bittakts (HB) bezüglich des Rahmentakts (HT) ausgerichtet wird.

2. Digitaler synchroner Übertrager nach Anspruch 1, dadurch gekennzeichnet, daß er zwei Anschlüsse besitzt, von denen der eine ein Anschluß der Norm V24 (2) und der andere ein Anschluß der Norm X21 (53) ist.

3. Digitaler synchroner Übertrager nach einem der Ansprüche 1 und 2, dadurch gekennzeichnet, daß die Mittel zur Erzeugung des Bittakts (HB) aufweisen:
- erste Mittel (47), die erste Unterbrechungen erzeugen, Timerunterbrechungen (INT TIM) genannt, deren Frequenz abgesehen von einer geringfügig höheren Geschwindigkeit dem Doppelten der Frequenz der Daten des angeschlossenen Endgeräts entspricht,
- und zweite Verarbeitungsmittel (48, HB BV, HB HV) der Timerunterbrechungen INT TIM, die die aufeinanderfolgenden entgegengerichteten Flanken des Bittakts (HB) an den aufeinanderfolgenden Timerunterbrechungen erzeugen, wobei eine der Timerunterbrechungen so verarbeitet wird, daß eine der Flanken des Bittakts (HB) erzeugt wird und die Verarbeitung der nachfolgenden Timerunterbrechung kontrolliert wird, die die entgegengesetzte nachfolgende Flanke des Bittakts (HB) erzeugt, und daß die Mittel zur Synchronisierung des Bittakts (HB) auf den Rahmentakt (HT) aufweisen:
- dritte Mittel (42, die zweite Unterbrechungen erzeugen, Serienunterbrechungen INT SER genannt, und zwar jeweils nach jedem den Kanal mit 64 kbit/s des Rahmentakts (HT) definierenden Impuls, wobei die Serienunterbrechungen eine Periode T von 125 µs besitzen,
- und vierte Verarbeitungsmittel (43, SER BV, SER HV) der Serienunterbrechungen INT SER, die bei der ersten zwischen einer der Serienunterbrechungen INT SER und einer der Timerunterbrechungen INT TIM vorgesehenen Koinzidenz die Erzeugung der entsprechenden Flanke des Bittakts (HB) erzwingt.

4. Digitaler synchroner Übertrager nach Anspruch 3, dadurch gekennzeichnet, daß die ersten, zweiten, dritten und vierten Mittel in einem Verarbeitungsprozessor (16) definiert sind, der einerseits Serienzugänge (DX, DR), die über Multiplexierkreise (15) und den Leitungsschnittstellenkreis (14) an die Leitung gekoppelt sind und von den vierten Verarbeitungsmitteln der Serienunterbrechungen (SER BV, SER HV) so verwaltet werden, daß die Daten und Signalisationskodes auf der Leitung übertragen werden, und der andererseits Zugänge (D) enthält, die mit dem angeschlossenen Endgerät und seinem Schnittstellenkreis gekoppelt sind und von den zweiten Mitteln zur Verarbeitung der Timerunterbrechungen (HB BV, HB HV) für die Übertragung der Daten und der Zustände der Anschlußkreise des Schnittstellenkreises in der einen oder anderen Richtung zwischen dem Endgerät und dem Verarbeitungsprozessor verwaltet werden.

5. Digitaler synchroner Übertrager nach Anspruch 4, dadurch gekennzeichnet, daß er weiter fünfte Mittel (T FOND BV, T FOND HV) besitzt, die den zweiten und vierten Mitteln (SER BV, SER HV; HB BV, HB HV) zugeordnet sind und den Datentransfer zwischen den Zugängen (D) und den Serienzugängen (DX, DR) gewährleisten, indem sie eine Rahmenbildung und eine inverse Rahmenzerlegung je nach der Transferrichtung durchführen, um die verschiedenen genormten Datendurchsätze an den Datendurchsatz der Leitung mit 64 kbit/s anzupassen, wenn diese Durchsätze unter 64 kbit/s liegen.

6. Digitaler synchroner Übertrager nach Anspruch 5, dadurch gekennzeichnet, daß er außerdem sechste Mittel (T FOND) enthält, um die Kontrolle der Signalisierkodes und der Zustände der Anschlußkreise und Tasten (6A, 7A) zur Steuerung spezieller Schleifen und des Verbindungsauf- und abbaus zu gewährleisten, wobei die sechsten Mittel mit den fünften Mitteln (T FOND BV, T FOND HV) gekoppelt sind und sie bei der Erfassung einer Verbindungsaufbauinformation in den von ihnen kontrollierten Kodes und Zuständen steuern.

7. Digitaler synchroner Übertrager nach Anspruch 6, dadurch gekennzeichnet, daß die vierten Mittel zur Verarbeitung der Serienunterbrechungen (SER BV, SER HV) und die zweiten Mittel zur Verarbeitung der Timerunterbrechungen (HB BV, HB HV) für verschiedene Bereiche von vorbestimmten Durchsatzbereichen spezifisch sind und gemäß einer in den sechsten Mitteln (T FOND) verwirklichten Auswahloperation (59) ausgewählt werden.

8. Digitaler synchroner Übertrager nach Anspruch 7, dadurch gekennzeichnet, daß die vierten Mittel zur Verarbeitung der Serienunterbrechungen (SER BV), die für einen unteren Geschwindigkeitsbereich der Durchsätze spezifisch sind, einen ersten Serienunterbrechungszähler (DEC) mit einer Zählperiode M und einen zweiten Zähler aufweisen, der Timerunterbrechungen (G TIM) erzeugt, mit einem schnellen Takt (H) gekoppelt ist und eine Zählperiode N besitzt, wobei M die Mindestanzahl von Serienunterbrechungen ist, der P Timerunterbrechungen im wesentlichen mit der Periode N entsprechen, wobei diese vierten Mittel die Synchronisierperiode des Bittakts (HB) auf den Rahmentakt (HT) definieren und der erste Zähler die Erzeugung der P-ten Timerunterbrechung bei Erfassung der M-ten Serienunterbrechung kontrolliert.

9. Digitaler synchroner Übertrager nach Anspruch 7, dadurch gekennzeichnet, daß die vierten Mittel zur Verarbeitung der Serienunterbrechungen (SER HV), die für einen hohen Geschwindigkeitsbereich des genormten Datendurchsatzes spezifisch sind, für den die Serienunterbrechungsperiode einem ganzzahligen Wert von Timerunterbrechungen entspricht, einen Zähler enthalten und der die Timerunterbrechungen (G TIM) erzeugt, mit einem schnellen Takt (H) zum Zählen der Impulse des schnellen Takts gekoppelt ist und dessen Zählperiode bei jeder Serienunterbrechung auf eine definierten Wert (N48, N56, N64) gesetzt wird, der der Erzeugung der ganzen Zahl von Timerunterbrechungen in jeder Serienunterbrechungsperiode entspricht, wobei dieser Wert für seine Verlängerung durch die zweiten Mittel zur Verarbeitung der Timerunterbrechungen (HB HV) bei der Verarbeitung der vorletzten Timerunterbrechung jeder Serienunterbrechungsperiode verändert wird.

## Claims

1. Synchronous digital transmitter for transmitting data over a digital transmission line between a terminal equipment (10, 11) having a standardized interface circuit and a multiservice digital PABX (12) accessing a public switched telephone network, the digital transmitter comprising:
- a line interface circuit (14) for modulating and demodulating digital signals transmitted on said line,
- a multiplexing circuit (15) interfaced to said line interface circuit for multiplexing and demultiplexing signals in the various channels of the line for half-duplex exchange of messages within a 125 µs frame, one of said channels being a signalling channel and another being a 64 kbit/s data transmission channel,
- means (15, 18) for producing a frame clock (HT) defining said 64 kbit/s channel of the line,
- means for processing data and signalling for their transmission in both directions to the PABX over the digital line and to the terminal equipment, said digital transmitter being characterized in that:
- at least a first socket (2, 3) is provided for selective connection to said transmitter of one of the V.24, V. 35/V.24, X.21 interfaces of terminal equipments with different standardized data rates, and in that
- means (16) are provided for generating a bit clock (HB) at a frequency very slightly greater than that of the data from the terminal equipment connected to the transmitter and the rising edges (R HB) of which control the transmission of data in one direction and the falling edges (X HB) of which control transmission of data in the other direction between the digital transmitter and the equipment, and
- means (16) are provided for synchronizing said bit clock (HB) to said frame clock (HT) with a synchronization period derived from the data rate of the terminal equipment connected relative to the frame clock (HT) frequency, the corresponding edge of the bit clock (HB) being resynchronized relative to the frame clock (HT) in each synchronization period.

2. Synchronous digital transmitter according to claim 1 characterized in that it comprises two sockets, a V.24 socket (2) and an X.21 socket (53).

3. Synchronous digital transmitter according to claim 1 or claim 2 characterized in that
- said means for generating said bit clock (HB) comprise:
. first means (47) for generating timer interrupts INT TIM at a frequency slightly greater than twice that of the connected terminal equipment data, and
. second means (48, HB BV, HB HV) for processing said timer interrupts INT TIM and generating the successive opposite direction edges of said bit clock (HB) on said successive timer interrupts, with the processing of one of said timer interrupts generating one of the edges of said bit clock (HB) and controlling the processing of the timer interrupt which follows it and which generates the next opposite direction edge of said bit clock (HB), and
- said means for synchronizing said bit clock (HB) to said frame clock (HT) comprise:
. third means (42) for generating serial interrupts INT SER after each pulse defining the 64 kbit/s channel of said frame clock (HT), said serial interrupts having a period T of 125 µs, and
. fourth means (43, SER BV, SER HV) for processing said serial interrupts INT SER responsive to the first coincidence between one of said serial interrupts INT SER and one of said timer interrupts INT TIM by forcing the generation of the corresponding edge of said bit clock (HB).

4. Synchronous digital transmitter according to claim 3 characterized in that said first, second, third and fourth means are implemented by a processor (16) having serial ports (DX, DR) interfaced to said line via said multiplexing circuit (15) and said line interface circuit (14) and managed by said fourth means for processing serial interrupts (SER BV, SER HV) for the transmission of data and signalling codes on the line and ports (D) interfaced to the connected terminal equipment and to its interface circuit and managed by said second means (HB BV, HB HV) for processing timer interrupts for the transmission of data and the status of interchange circuits of the interface in both directions between the terminal equipment and the processor.

5. Synchronous digital transmitter according to claim 4 characterized in that it further comprises fifth means (T FOND BV, T FON HV) associated with said second and fourth means (SER BV, SER HV; HB BV HB HV) for transferring data between said ports (D) and said serial ports (DX, DR), carrying out framing and complementary deframing according to the transfer direction, to match standardized data rates of the data below 64 kbit/s to the 64 kbit/s line data rate.

6. Synchronous digital transmitter according to claim 5 characterized in that it further comprises sixth means (T FOND) for monitoring signalling codes and interchange circuit status information and specific loopback and connection/disconnection control switches (6A, 7A), said sixth means being interfaced to said fifth means (T FOND BV, T FOND HV) and commanding them on detection of connection information in the codes and status information that they monitor.

7. Synchronous digital transmitter according to claim 6 characterized in that said fourth means (SER BV, SER HV) for processing serial interrupts and said second means (HB BV, HB HV) for processing timer interrupts are specific to predetermined different ranges of standardized data rates selected by a selection operation (59) internal to said sixth means (T FOND).

8. Synchronous digital transmitter according to claim 7 characterized in that said fourth means (SER BV) for processing serial interrupts specific to a range of low data rates comprise a first serial interrupt counter (DEC) having a counting period M and a second timer interrupt generator counter (G TIM) interfaced to a fast clock (H) and having a counting period N where M is the minimal number of serial interrupts corresponding to P timer interrupts, substantially at the period N, and defining the period for synchronizing the bit clock (HB) to the frame clock (HT), said first counter controlling generation of the Pth timer interrupt on detection of the Mth serial interrupt.

9. Synchronous digital transmitter according to claim 7 characterized in that said fourth means (SER HV) for processing serial interrupts specific to a range of standardized high data rates of data for which the serial interrupt period corresponds to an integer number of timer interrupts comprise a timer interrupt generator counter (G TIM) interfaced to a fast clock (H) for counting pulses of said fast clock and the counting period of which is loaded on each serial interrupt with a defined value (N48, N56, N64) corresponding to the generation of the integer number of timer interrupts in each serial interrupt period and is modified, to extend it, by said second means for processing timer interrupts (HB HV) on processing of the penultimate timer interrupt in each serial interrupt period.
